# EUROPEAN PATENT SPECIFICATION

(11) **EP 0 826 731 B1**
(45) Date of publication and mention of the grant of the patent: **26.04.2000**
(21) Application number: 97115018.0
(22) Date of filing: 29.08.1997
(51) Int. Cl.: C08L 77/00, C08K 7/14, C08J 5/18, C08G 69/36

(54) **Use of polyamide compositions in biaxially stretched films of low surface gloss**
Verwendung von Polyamidzusammensetzungen in biaxial gereckten Filmen mit niedrigem Oberflächenglanz
Utilisation de compositions de polyamide aux films biaxialment étirées à eclat superficiel reduit

(30) Priority: 30.08.1996 JP 23007896
(43) Date of publication of application: 04.03.1998
(73) Proprietor: MITSUBISHI ENGINEERING-PLASTICS CORPORATION, Tokyo 104 (JP)
(72) Inventor: Urabe, Hiroshi, 5-chome, Hiratsuka-shi, Kanagawa-ken (JP); Sugiura, Katsuhiko, 5-chome, Hiratsuka-shi, Kanagawa-ken (JP); Watanabe, Ken, 5-chome, Hiratsuka-shi, Kanagawa-ken (JP)
(74) Representative: Hansen, Bernd, Dr. Dipl.-Chem.

(56) References cited:
- EP-A- 0 408 390
- EP-A- 0 620 244
- EP-A- 0 696 615
- US-A- 3 968 071

## Description

The present invention relates to the use of a polyamide resin composition as a biaxially stretched film of low surface gloss, and a food packaging bag made of the said film. More particularly the present invention relates to a tough biaxially stretched film which is made from the said polyamide resin composition and has little surface gloss, and a food packaging bag made of the said film which is scarcely deformed even when subjected to a heat-treatment with a foodstuff packed therein.

Polyamide films are popularly used for various purposes, primarily for packaging of foods, in various forms such as single-layer film, multilayer film with other resin(s), and laminated film with other materials because of their excellent gas barrier properties, mechanical properties and thermal properties. Especially, biaxially stretched polyamide films are tough and also high in heat resistance. These polyamide films are smooth and glossy on the surface, but in some uses the films with little surface gloss or a matted appearance are required. In certain cases, even a film having an appearance and feel resembling those of matte paper or paper coated with PVDC or the like is required.

Various attempts have been made for modifying the surface qualities of the films to be used for such particular uses. For example, there have been proposed some methods in which the particles of various types of inorganic fillers such as talc, silica, calcium carbonate, etc., are blended in the resin composition to roughen the produced film surface; other resin such as polyethylene is blended in a small quantity to opacify the produced film; the produced film is subjected to post-treatment with the rolls surface-roughened by embossing or other means to form unevenness on the film surface; or the like.

However, in the method wherein an inorganic filler is blended, those fillers which are relatively small in particle size can be only blended because the fillers may cause break of the film when biaxially stretched. Further, since the amount of filler added is limited, a film having a desired matted surface appearance can not be obtained, and moreover, the film strength lowers. Also, in the method wherein other resin is blended, although transparency of the film is reduced and a slight decrease of gloss is recognized, the effect of this method is still unsatisfactory, and further the film strength lowers.

According to the method in which the film surface is roughened by post-treatment, although the operation to the non-stretched films is relatively easy, there arises a problem that when the surface-roughened film is stretched, the film surface again becomes smooth and the surface becomes glossy. The tough film which has been stretched and oriented can not be roughened on the film surface unless a high pressure is applied under a high temperature. This operation has the risk of flawing the film surface thereby reducing its strength or causing shrinkage of the stretched film, and further an extra expense for post-treatment is necessitated. Therefore, this method is uneconomical.

The present inventors have proposed a polyamide resin composition prepared by blending a fibrous material in a polyamide resin and a biaxially stretched film made therefrom in Japanese Patent Application Laid-Open (KOKAI) Nos. 6-238749 and 8-53617. These films are excellent in prevention of change of color quality after boiling, but its surface gloss is still as high as 34-60%. Usually, when the surface gloss is not more than 30%, no gloss is recognized by visual observation. Therefore, it is hardly possible to obtain a satisfactory matte surface appearance with a surface gloss more than 30%.

As a result of the present inventors' earnest studies to solve the above problem, it has been found that a biaxially stretched film made from a polyamide resin composition obtained by blending glass fibers in a blend of at least two types of polyamide each having a specified amount of specific polyamide-repeating units has an excellent matte surface appearance and high toughness. The present invention has been attained on the basis of this finding.

The object of the present invention is to provide a biaxially stretched film having an excellent matte surface appearance (gloss value is not more than 30%) and high toughness.

To accomplish this aim, there is provided a polyamide resin composition for film-molding, which comprises 0.5 to 15 parts by weight of a glass fiber and 100 parts by weight of a polyamide resin material comprising a blend of at least two polyamides and having a polyamide-repeating unit constitution comprising:
(1) 10 to 90 weight % of nylon 6 repeating unit derived from caprolactam,
(2) 0.5 to 30 weight % of nylon 66 repeating unit derived from the condensation of adipic acid and hexamethylene diamine,
(3) 0.5 to 50 weight % of nylon-6T repeating unit derived from the condensation of terephthalic acid and hexamethylene diamine,
(4) 0.5 to 30 weight % of nylon-6I repeating unit derived from the condensation of isophthalic acid and hexamethylene diamine, and
(5) 1 to 15 weight % of MX-nylon repeating unit derived from the condensation of aliphatic dicarboxylic acid and xylene diamine.

Furthermore, there is provided a biaxially stretched film comprising the said polyamide resin composition as defined above.

Another aim is to provide a biaxially stretched laminated film comprising a layer comprising the said polyamide resin composition defined as in the above first aspect and at least one layer comprising other polymer than the one described above.

The present invention is described in detail below.

The polyamide resin material used in the present invention comprises caprolactam units (nylon 6 units), polyamide-forming units (nylon 66 units) comprising adipic acid and hexamethylenediamine, polyamide-forming units (nylon 6T units) comprising terephthalic acid and hexamethylenediamine, polyamide-forming units (nylon 6I units) comprising isophthalic acid and hexamethylenediamine, and polyamide-forming units comprising aliphatic dicarboxylic acid and xylenediamine (MX-nylon units). These units are contained in the specified percentages.

The percentage of the caprolactam units (nylon 6 units) is 10 to 90 % by weight based on the weight of the whole polyamide resin material. When the percentage of the nylon 6 units is more than 90 % by weight, the produced film may be whitened in its entirety when subjected to a heat treatment such as boiling, thereby causing a change of color quality of the film to reduce its commercial value. When the percentage of the nylon 6 units is less than 10 % by weight, the matting effect of the composition may tend to lower, and also the improvement of film strength by stretching may diminish. Thus, the percentage of the nylon 6 units is preferably 50 to 90 % by weight, more preferably 65 to 87 % by weight based on the weight of the polyamide resin material.

The polyamides which can be used for producing nylon 6 units include polyamide of ε-caprolactam-hexamethylenediamine-adipic acid copolymer (nylon 6/66), polyamide of ε-caprolactam-hexamethylenediamine-terephthalic acid copolymer (nylon 6/6T), and polyamide comprising ε-caprolactam. Of these polyamides, nylon 6/66 and nylon 6/6T are preferred.

As the nylon 6/66, the one containing the 66 units of 5 to 20 % by weight is preferable. As the nylon 6/6T, the one containing 6T units of 1 to 15 % by weight is preferable.

The percentage of the polyamide-forming units (nylon 66 units) comprising adipic acid and hexamethylenediamine is 0.5 to 30 % by weight based on the weight of the whole polyamide resin material. When the percentage of the nylon 66 units is less than 0.5 % by weight, flexibility of the produced film may tend to lower, and when the percentage is more than 30 % by weight, the film may be liable to become whitened when heated and also may tend to become yellowish tint when kept under a high temperature for a long time. Thus, the percentage of the nylon 66 units is preferably 1 to 15 % by weight, more preferably 1 to 10 % by weight based on the weight of the whole polyamide resin material.

The polyamides which is used for producing nylon 66 units include polyamide of ε-caprolactam-hexamethylenediamine-adipic acid copolymer (nylon 6/66), and polyamide comprising hexamethylenediamine and adipic acid (nylon 66). Of these polyamides, nylon 6/66 is preferred.

The percentage of the polyamide-forming units (nylon 6T units) comprising terephthalic acid and hexamethylenediamine is 0.5 to 50 % by weight based on the weight of the whole polyamide resin material. When the percentage of nylon 6T units is less than 0.5 % by weight, the stretch stability and gas barrier properties of the produced film may tend to deteriorate, and when the percentage is more than 50 % by weight, the matting effect may tend to lower. Accordingly, the percentage of nylon 6T units is preferably 1 to 30 % by weight, more preferably 2 to 20 % by weight based on the weight of the polyamide resin material.

The polyamides which is used for giving nylon 6T units include polyamide of ε-caprolactam-hexamethylenediamine-terephthalic acid copolymer (nylon 6/6T), polyamide of isophthalic acid-terephthalic acid-hexamethylenediamine copolymer (nylon 6I/6T), and polyamide comprising terephthalic acid and hexamethylenediamine. Of these polyamides, nylon 6/6T and nylon 6I/6T are preferred. The copolymerization ratio of nylon 6I/6T is preferably 80/20 to 40/60 (by weight).

The percentage of the polyamide-forming units (nylon 6I units) comprising isophthalic acid and hexamethylenediamine is 0.5 to 30 % by weight based on the weight of the whole polyamide resin material. When the percentage of nylon 6I units is less than 0.5 % by weight, stretch stability and gas barrier properties of the produced film may tend to deteriorate, and when the percentage is more than 30 % by weight, the gloss value of the film may tend to increase to reduce the matte effect. Thus, the percentage of nylon 6I units is preferably 1 to 15 % by weight, more preferably 1 to 10 % by weight based on the weight of the whole polyamide resin material.

The polyamides which is used for producing nylon 6I units include polyamide of ε-caprolactam-hexamethylenediamine-isophthalic acid copolymer (nylon 6/6I), polyamide of isophthalic acid-terephthalic acid-hexamethylenediamine copolymer (nylon 6I/6T), and polyamide comprising isophthalic acid and hexamethylenediamine. Of these polyamides, nylon 6I/6T is preferred. The copolymerization ratio of nylon 6I/6T is preferably 80/20 to 40/60 (by weight).

The percentage of the polyamide-forming units (MX-nylon units) comprising aliphatic dicarboxylic acid and xylenediamine is 1 to 15 % by weight based on the weight of the whole polyamide resin material. When the percentage of the said polyamide-forming units is less than 1 % by weight, the matte effect may tend to be reduced, and when the percentage is more than 15 % by weight, stretch stability may tend to lower. Thus, the percentage of the polyamide-forming units comprising aliphatic dicarboxylic acid and xylenediamine is preferably 2 to 12 % by weight based on the weight of the whole polyamide resin material.

The polyamides which is used for producing polyamide-forming units comprising aliphatic dicarboxylic acid and xylenediamine is polyamide comprising methaxylenediamine and adipic acid (so-called nylon MXD-6). It is notable that the addition of nylon MXD-6 is effective for remarkably reducing surface gloss of the film made from the polyamide resin composition of the present invention.

In the present invention, each unit component can be calculated by multiplying the weight copolymerization ratio of each unit component in the resin used by weight blending ratio of each resin and totaling the obtained values for the respective unit components.

The polyamide resin material used in the present invention is a blend of at least two kinds of polyamide. As the polyamides usable in the present invention, polyamide polymers and polyamide copolymers can be mentioned. The polyamide polymers include nylon 6, nylon 66, nylon 6I, nylon 6T and nylon MXD-6, and the polyamide copolymers containing two of the said essential units include nylon 6/66, nylon 6/6T, nylon 6/6I, nylon 6I/6T, nylon MXD-6/6T, nylon MXD-6/66 or the like. The polyamide copolymers containing 3 or more of said essential units include nylon 6/6I/6T, nylon 66/6I/6T or the like.

The polyamide resin material according to the present invention is a blend of at least two kinds, preferably at least three kinds of polyamide comprising the said five essential structural units. The polyamide resin material having the said five essential structural units in the above-specified amounts can be prepared by blending five or more kinds of polyamide homopolymer comprising one essential structural unit or by blending two or more kinds of polyamide copolymer comprising two or more essential structural units.

The blend forming the polyamide resin material in the present invention is preferably a blend of a polyamide 1 comprising ε-caprolactam, hexamethylenediamine and adipic acid (nylon 6/66), a polyamide 2 comprising ε-caprolactam, hexamethylenediamine and terephthalic acid (nylon 6/6T), a polyamide 3 comprising hexamethylenediamine, isophthalic acid and terephthalic acid (nylon 6I/6T) and a polyamide 4 comprising xylenediamine and adipic acid (nylon MXD-6).

The blending percentages of the respective polyamides (nylon 6/66, nylon 6/6T, nylon 6I/6T and nylon MXD-6) in the above blend are as follows:
nylon 6/66: 1 to 30 % by weight, preferably 5 to 20 % by weight;
nylon 6/6T: 15 to 95 % by weight, preferably 20 to 80 % by weight;
nylon 6I/6T: 1 to 30 % by weight, preferably 1 to 15 % by weight;
nylon MXD-6: 1 to 15 % by weight, preferably 3 to 10 % by weight, more preferably 5 to 10 % by weight.

Viscosity of the respective polyamides in the blend is preferably medium to high, such as 1.5 to 6.0, preferably 2.0 to 5.5, more preferably 3.0 to 5.0 in terms of relative viscosity as measured according to JIS K6810.

Water extraction of the respective polyamides in the blend is preferably not more than 1%, more preferably not more than 0.5%. Water extraction indicates the content of the low-molecular weight materials and can be determined according to JIS K6810. When the water extraction is more than 1%, the low-molecular weight materials such as monomers and dimers may tend to deposit around the die lip, and the deposited low-molecular weight materials contact or adhere to the film, resulting in troubles such as formation of fish eyes to impair quality or visual appearance of the film.

In forming the polyamide resin composition used in present invention, glass fibers are blended in the polyamide resin material. As the glass fibers used in the present invention, the diameter (D) is preferably 3 to 15 µm, the average length (L) is preferably 15 to 200 µm, more preferably 20 to 150 µm and the ratio (L/D) of the average length to diameter is preferably 2 to 20, more preferably 2 to 15, still more preferably 2 to 10. When the average length of glass fibers is more than 200 µm, the produced film may tend to break when stretched, and when the average length is less than 15 µm, the matte effect may tend to become unsatisfactory. The glass fibers in the state of being contained in a stretched film have the diameter (D) of preferably 3 to 15 µm, the average length (L) of preferably 15 to 150 µm, more preferably 20 to 100 µm and the ratio (L/D) of the average length to diameter of preferably 2 to 15, more preferably 2 to 10.

There is no specific restriction on the kind of glass fibers usable in the present invention and generally glass fibers for reinforcement of thermoplastic resins can be used. The length of glass fibers blended is not necessarily restricted in the above-defined range. It is possible to use long glass fibers, such as chopped strand or roving, which are cut to a suitable length by mechanically crushing them when blended with the resin material or during film forming operation. It is, however, preferred to blend short glass fibers, or so-called milled fibers, having a size falling in the above-defined range from the beginning, because the film is liable to break when stretched unless it is substantially free of long fibers having a length more than 500 µm. Also, for avoiding break of the film when stretched, it is preferable to enhance adhesive force between glass fibers and polyamide resin, and it is very effective for this purpose to surface-treat glass fibers by adding a silane-based treating agent. There is no restriction on the kind of silane-based treating agent used in the present invention, but those having amino groups or epoxy groups are especially effective.

The amount of glass fibers blended is 0.5 to 15 parts by weight, preferably 1 to 12 parts by weight, more preferably 2 to 10 parts by weight based on 100 parts by weight of polyamide resin material. When the blending amount is more than 15 parts by weight, the film may be apt to break when stretched, and when the amount is less than 0.5 parts by weight, it may be hardly possible to obtain a desired matte effect.

In the polyamide resin composition used in the present invention, the glass fibers are blended in a polyamide is comprising xylenediamine and an aliphatic dicarboxylic acid to produce a film having a gloss value of not more than 30%, preferably not more than 20 %, which has a smooth feel and excellent matte effect. Further, by adjusting the composition of the polyamide resin material and the blending percentages of the components, it is possible to greatly improve the mechanical properties, especially tensile strength and piercing resistance, of the biaxially stretched film.

In case where the glass fibers are not added into the resin composition comprising the above five essential structural units, the film obtained therefrom has an excellent gas barrier property.

The method of producing the polyamide resin composition used in the present invention is not specified; the composition can be produced according to known methods. For example, glass fibers are dry-blended in a specified ratio with polyamide pellets, or glass fibers and polyamide pellets are melt-mixed by using an extruder or other means.

The polyamide resin composition used in the present invention may contain, besides polyamides and glass fibers, various known additives, for example, inorganic fillers such as silica, talc, kaolin, calcium carbonate, zeolite, wollastonite, etc., antioxidants such as hindered phenols, phosphoric esters, phosphorous esters, etc., weathering agent such as benzotriazole compounds, colorant such as pigment, dye, etc., antistatic agent, and lubricant. The content of the additives is usually not more than 5 parts by weight based on 100 parts by weight of the polyamide resin composition.

The biaxially stretched film of the present invention is produced from the thus prepared resin composition according to a known film forming-method. T-die method and inflation method are exemplified as the typical examples of the film-forming method of the biaxially stretched film, which comprises stretching the film in both machine and transverse directions simultaneously or successively. Any suitable method known in the art can be applied for stretching the film. The stretch ratio is usually 2 to 5 times, preferably 2 to 4 times in both machine and transverse directions.

The biaxially stretched film of the present invention may be a single-layered film or a multilayered film formed by coextrusion or lamination.

The thickness of the biaxially stretched film is usually 3 to 50 µm, preferably 10 to 30 µm, in the case of single-layered film. In the case of multilayered film, the thickness of the biaxially stretched film comprising the said resin composition is usually 2 to 50 µm, preferably 5 to 30 µm. When the thickness of the biaxially stretched film is more than 50 µm, too much stress is exerted when the film is stretched, making it unable to stretch the film. When the film thickness is less than 3 µm (or when the thickness of the film comprising the resin composition in the case of multilayered film is less than 2 µm), the gas barrier properties and/or the matting effect may be reduced.

In the case of multilayered film, it is preferable to laminate a biaxially stretched film of the present invention with adhesive polyolefin layer such as MODIC-AP (Mitsubishi Chemical) F504, linear low density polyethylene (LLDPE), ethylene vinylalcohol copolymer (EVOH) or the like. Examples of laminated film are a three-layered film comprising polyamide resin composition/adhesive polyolefin/LLDPE, a four-layered film comprising polyamide resin composition/EVOH/adhesive polyolefin/LLDPE. The overall thickness of the laminated film is preferably 20 to 200 µm.

The laminated film can be formed by a method, for example, coextrusion-costretching method in which three types polyamide resin are coextruded in stratiform and stretched. As the coextrusion-costretching, there is the double-bubble method in which the resins are extruded in tube-like film, once quenched, heated and stretched while introducing air into the inner space thereof; or successively the role-and-tenter method in which the resins are extruded in planner film, heated again, stretched in a machine direction by a role system and stretched in a transverse direction by a tenter successively.

Further, the multilayered film can be formed by a method in which each polyamide resin is extruded by tubular method or successively the role-and-tenter method and thereafter laminated by dry-lamination or extrusion-lamination to obtain a multilayered film in which the olefin layer is adhered. Considering the productivity and machine cost, the coextrusion-costretching method is preferred.

The polyamide resin composition for films according to the present invention is capable of biaxially stretching, and the biaxially stretched film made from such a resin composition is remarkably depressed in surface gloss, has an appearance and feel very close to those of paper, and is tough and, in use for food packaging, hardly deformed even when subjected to a heat-treatment with a foodstuff packed therein. Therefore, the film of the present invention is particularly useful for food packaging.

### EXAMPLES

The present invention is explained in further detail with reference to the examples thereof, but it should be understood that the scope of the present invention is not restricted by these examples.

Evaluations of the films and the various properties thereof in the following Examples and Comparative Examples were made as follows.

### (1) Gloss value

The gloss value indicating surface glossiness of the films was determined by measuring glossiness at an angle of incidence of 60° according to JIS-Z-8741 using a glossmeter MODE-108D mfd. by Tokyo Denshoku Co., Ltd.

### (2) Physical properties of glass fibers

The film was burned in a 600°C electric furnace to obtain the glass fibers alone. These glass fibers were spread on a slide glass and the lengths of 200 pieces thereof (selected from those having a length not less than 10 µm) were measured under a microscope to determine the average length.

### (3) Stretchability

Stretchability was evaluated based on following criterion by stretching the film samples under the conditions described below.
- ○:: The percentage of success of stretching is not less than 95%.
- Δ:: The percentage of success of stretching is not less than 30% to less than 95%.
- ×:: The percentage of success of stretching is less than 30%.

It is essential for the film of the present invention to have a stretchability rating of ○ or Δ.

The polyamides and glass fibers used in the following Examples and Comparative Examples are as follows:
(i) Nylon 6/66: a commercially available copolymer polyamide(nylon 6 units, 80 % by weight; nylon 66 units, 20 % by weight), relative viscosity: 4.5.
(ii) Nylon 6/6T: a commercially available copolymer polyamide(nylon 6 units, 90 % by weight; nylon 6T units, 10 % by weight), relative viscosity: 3.5.
(iii) Nylon 6I/6T: a commercially available hexamethylenediamine/ isophthalic acid/terephthalic acid copolymer polyamide (isophthalic acid/terephthalic acid (by weight) = 2.5/1).
(iv) MX-nylon 6121 (produced by Mitsubishi Gas Chemical Co., Inc.), a polyamide giving the polyamide forming units comprising aliphatic dicarboxylic acid and xylenediamine.
(v) Glass fiber-1: EPG70M10A produced by Nippon Electric Glass Co., Ltd., having an average length of 70 µm and a diameter of 9 µm, silane-treated.
(vi) Glass fiber-2: EPG40M10A produced by Nippon Electric Glass Co., Ltd.) having an average length of 40 µm and a diameter of 9 µm, silane-treated.
(vii) Glass fiber-3: EPG70 produced by Nippon Electric Glass Co., Ltd., having an average length of 70 µm and a diameter of 9 µm; no silane treatment.
(viii) Glass fiber-4: CS03MA41 produced by Asahi Fiber Glass Co., Ltd., having an average length of 3 mm and a diameter of 13 µm; silane-treated.

### Example 1

As polyamide resin components 14.7 Parts by weight of nylon 6/66, 64.4 parts by weight of nylon 6/6T, 10.5 parts by weight of nylon 6I/6T, 7.4 parts by weight of MX-nylon 6121, and 5.3 parts by weight of glass fiber-1 were blended, mixed by a 35 mm φ vented twin-screw extruder at a resin temperature of 260°C and pelletized. The resin moiety in the pellets consisted of 72.4 % by weight of nylon 6 units, 2.9 % by weight of nylon 66 units, 9.8 % by weight of nylon 6T units, 7.5 % by weight of nylon 6I units and 7.4 % by weight of polyamide-forming units comprising an aliphatic dicarboxylic acid and xylenediamine. These pellets were dried in vacuum at 120°C for 10 hours to obtain the dry pellets and they were molded into a 180 µm thick cast film by a 40 mm φ T-die type film-forming machine at a resin temperature of 250°C. The obtained film was heated to 80°C and biaxially stretched 3×3 in both directions simultaneously by a film stretcher (mfd. by T. M. Long Co., Ltd.) to obtain a biaxially stretched film. It was then annealed in an air oven of 180°C for one minute. The evaluation results are shown in Table 1.

**Table 1**

| | Stretchability | Average glass length (µm) | Gloss value (%) |
|---|---|---|---|
| Example 1 | ○ | 55 | 9.0 |
| Example 2 | ○ | 30 | 8.5 |
| Example 3 | △ | 30 | 9.5 |
| Comparative Example 1 | ○ | - | 90 |
| Comparative Example 2 | × | 220 | - |

### Example 2

The same procedure as in Example 1 was followed except that glass fiber-2 was used in place of glass fiber-1 to obtain the pellets and a biaxially stretched film. The evaluation results are shown in Table 1.

### Example 3

The same procedure as in Example 1 was followed except that glass fiber-3 was used in place of glass fiber-1 to obtain the pellets and a biaxially stretched film. The evaluation results are shown in Table 1.

### Comparative Example 1

The same procedure as in Example 1 was followed except that no glass fiber-1 was used to obtain the pellets and a biaxially stretched film. The evaluation results are shown in Table 1.

### Comparative Example 2

The same procedure as in Example 1 was followed except that 6.3 parts by weight of glass fiber-4 was used instead of using 5.3 parts by weight of glass fiber-1 to obtain the pellets and a biaxially stretched film. The evaluation results are shown in Table 1.

### Examples 4-7 and Comparative Examples 3-4

Polyamide resin compositions and biaxially stretched films were made according to the same procedure as in Example 1 by changing the percentages of the polyamide resin components used in Examples 1-3 as shown in Table 2 and by using the glass fibers used in Example 2 in the amounts shown in Table 2. The evaluation results are shown in Table 2.

**Table 2**

| | Percent to polyamide resin moiety | | | | | Glass fiber (wt parts) | Gloss value (%) |
|---|---|---|---|---|---|---|---|
| | Nylon 6 units (% by weight) | Nylon 66 units (% by weight) | Nylon 6T units (% by weight) | Nylon 6I units (% by weight) | Nylon MXD-6 units (% by weight) | | |
| Ex.4 | 61 | 6 | 9.8 | 13.2 | 10 | 5 | 20 |
| Ex.5 | 72.4 | 7.2 | 3.2 | 9.8 | 7.4 | 6 | 19 |
| Ex.6 | 80.5 | 1.2 | 9.8 | 7.5 | 1 | 6 | 25 |
| Ex.7 | 90 | 2.9 | 1.0 | 3.1 | 3 | 9 | 29 |
| Comp. Ex.3 | 35 | 2 | 13 | 35 | 15 | 6 | 35 |
| Comp. Ex.4 | 77 | 5.7 | 9.8 | 7.5 | 0 | 6 | 48 |

## Claims

1. The use of an MX-nylon repeating unit derived from the condensation of an aliphatic dicarboxylic acid and a xylene diamine as a component of a polyamide resin composition formed into a biaxially stretched film for reducing the latter's surface gloss;
the polyamide resin composition comprising 0.5 to 15 parts by weight of glass fibers and 100 parts by weight of a polyamide resin material comprising a blend of at least two polyamides and having an average polyamide-repeating unit constitution which comprises:
(1) 10 to 90 weight % of nylon 6 repeating unit derived from caprolactam,
(2) 0.5 to 30 weight % of nylon 66 repeating unit derived from the condensation of adipic acid and hexamethylene diamine,
(3) 0.5 to 50 weight % of nylon-6T repeating unit derived from the condensation of terephthalic acid and hexamethylene diamine,
(4) 0.5 to 30 weight % of nylon-6I repeating unit derived from the condensation of isophthalic acid and hexamethylene diamine, and
(5) 1 to 15 weight % of the MX-nylon repeating unit.

2. The use according to Claim 1, wherein said polyamide resin material is a blend comprising polyamide 1 comprising ε-caprolactam, hexamethylene diamine and adipic acid; polyamide 2 comprising ε-caprolactam, hexamethylene diamine and terephthalic acid; polyamide 3 comprising hexamethylene diamine, isophthalic acid and terephthalic acid; and polyamide 4 comprising xylene diamine and adipic acid.

3. The use according to Claim 1 or Claim 2, wherein the fiber diameter of said glass fiber (D) is 3 to 15 µm, the average fiber length of said glass fiber is 15 to 200 µm and the ratio (L/D) of the fiber diameter to the average fiber length is 2 to 15.

4. The use according to any preceding Claim, wherein the surface gloss of the biaxially stretched film is not more than 30%.

5. The use according to any preceding Claim, wherein the thickness of the biaxially stretched film is 3 to 50 µm.

6. The use according to any of Claims 1-4, wherein the thickness of the biaxially stretched film is 2 to 50 µm and at least one layer is further laminated on said biaxially stretched film.

7. The use according to any of Claims 1-5, wherein the biaxially stretched film is a laminate which comprises a layer formed from the polyamide resin composition as defined in any of Claims 1-4 Claim 1 or Claim 2 and at least one layer comprising another different polymer.

8. The use according to Claim 7, wherein the other different polymer is an adhesive polyolefin, a linear low density polyethylene or an ethylene vinylalcohol copolymer.

## Patentansprüche

1. Verwendung von sich wiederholenden MX-Nylon-Einheiten aus der Kondensation einer aliphatischen Dicarbonsäure und Xyloldiamin als Komponente in einer Polyamid-Harzzusammensetzung, die zu einer biaxial verstreckten Folie verarbeitet wird, zur Verminderung des Oberflächenglanzes;
wobei die Polyamid-Harzzusammensetzung 0,5 bis 15 Gew.-Teile Glasfasern und 100 Gew.-Teile Polyamid-Harzmaterial umfaßt, das eine Mischung aus wenigstens zwei Polyamiden ist und eine durchschnittliche sich wiederholende Polyamid-Einheitenstruktur hat die umfaßt:
(1) 10 bis 90 Gew.-% Nylon 6-Einheiten, abgeleitet aus Caprolactam,
(2) 0,5 bis 30 Gew.-% Nylon 66-Einheiten, abgeleitet aus der Kondensation von Adipinsäure und Hexamethylendiamin,
(3) 0,5 bis 50 Gew.-% Nylon 6T-Einheiten, abgeleitet aus der Kondensation von Terephthalsäure und Hexamethylendiamin,
(4) 0,5 bis 30 Gew.-% Nylon 6I-Einheiten, abgeleitet aus der Kondensation von Isophthalsäure und Hexamethylendiamin und
(5) 1 bis 15 Gew.-% MX-Nylon-Einheiten.

2. Verwendung gemäß Anspruch 1, bei der das Polyamid-Harzmaterial eine Mischung umfassend Polyamid 1, umfassend ε-Caprolactam, Hexamethylendiamin und Adipinsäure; Polyamid 2, umfassend ε-Caprolactam, Hexamethylendiamin und Terephthalsäure; Polyamid 3, umfassend Hexamethylendiamin, Isophthalsäure und Terephthalsäure; und Polyamid 4, umfassend Xyloldiamin und Adipinsäure ist.

3. Verwendung gemäß Anspruch 1 oder Anspruch 2, bei der der Durchmesser der Glasfasern (D) 3 bis 15 µm beträgt, die durchschnittliche Glasfaserlänge 15 bis 200 µm beträgt und das Verhältnis (L/D) von Faserdurchmesser zur durchschnittlichen Faserlänge 2 bis 15 ist.

4. Verwendung gemäß einem der vorstehenden Ansprüche, bei der der Oberflächenglanz der biaxial gestreckten Folie nicht mehr als 30 % beträgt.

5. Verwendung gemäß einem der vorstehenden Ansprüche, bei der die Dicke der biaxial gestreckten Folie 3 bis 50 µm beträgt.

6. Verwendung gemäß einem der Ansprüche 1 bis 4, bei der die Dicke der biaxial gestreckten Folie 2 bis 50 µm beträgt und wenigstens eine weitere Schicht auf die biaxial gestreckte Folie laminiert wird.

7. Verwendung gemäß einem der Ansprüche 1 bis 5, bei der die biaxial gestreckte Folie ein Laminat ist, umfassend eine Schicht aus einer Polyamid-Harzzusammensetzung gemäß einem der Ansprüche 1 bis 4 und wenigstens eine Schicht, umfassend ein anderes Polymer.

8. Verwendung gemäß Anspruch 7, bei dem das andere Polymer ein adhäsives Polyolefin, ein lineares low density Polyethylen oder ein Ethylenvinylalkohol-Copolymer ist.

## Revendications

1. Utilisation d'un motif récurrent de Nylon MX formé par la condensation d'un acide dicarboxylique aliphatique et d'une xylylènediamine comme constituant d'une composition de résine polyamide transformée en un film étiré biaxialement pour réduire le brillant de surface de celui-ci ;
la composition de résine polyamide comprenant 0,5 à 15 parties en poids de fibres de verre et 100 parties en poids d'une résine polyamide comprenant un mélange d'au moins deux polyamides et ayant une constitution moyenne de motifs récurrents de polyamide comprenant :
(1) 10 à 90 % en poids de motif récurrent de Nylon 6 dérivé de caprolactame,
(2) 0,5 à 30 % en poids de motif récurrent de Nylon 6-6 formé par la condensation d'acide adipique et d'hexaméthylènediamine,
(3) 0,5 à 50 % en poids de motif récurrent de Nylon 6T formé par la condensation d'acide téréphtalique et d'hexaméthylènediamine,
(4) 0,5 à 30 % en poids de motif récurrent de Nylon 6I formé par la condensation d'acide isophtalique et d'hexaméthylènediamine, et
(5) 1 à 15 % en poids de motif récurrent de Nylon MX.

2. Utilisation selon la revendication 1, dans laquelle ladite résine polyamide est un mélange comprenant un polyamide 1 comprenant du ε-caprolactame, de l'hexaméthylènediamine et de l'acide adipique ; un polyamide 2 comprenant du ε-caprolactame, de l'hexaméthylènediamine et de l'acide téréphtalique ; un polyamide 3 comprenant de l'hexaméthylènediamine, de l'acide isophtalique et de l'acide téréphtalique ; et un polyamide 4 comprenant de la xylylènediamine et de l'acide adipique.

3. Utilisation selon la revendication 1 ou la revendication 2, dans laquelle le diamètre de fibre desdites fibres de verre (D) est de 3 à 15 µm, la longueur moyenne de fibre desdites fibres de verre est de 15 à 200 µm et le rapport (L/D) du diamètre de fibre à la longueur moyenne de fibre est de 2 à 15.

4. Utilisation selon l'une quelconque des revendications précédentes, dans laquelle le brillant de surface du film étiré biaxialement n'est pas supérieur à 30 %.

5. Utilisation selon l'une quelconque des revendications précédentes, dans laquelle l'épaisseur du film étiré biaxialement est de 3 à 50 µm.

6. Utilisation selon l'une quelconque des revendications 1 à 4, dans laquelle l'épaisseur du film étiré biaxialement est de 2 à 50 µm et au moins une couche supplémentaire est stratifiée sur ledit film étiré biaxialement.

7. Utilisation selon l'une quelconque des revendications 1 à 5, dans laquelle le film étiré biaxialement est un stratifié qui comprend une couche formée à partir de la composition de résine polyamide telle que définie dans l'une quelconque des revendications 1 à 4, la revendication 1 ou la revendication 2, et au moins une couche comprenant un autre polymère différent.

8. Utilisation selon la revendication 7, dans laquelle l'autre polymère différent est une polyoléfine adhésive, un polyéthylène basse densité linéaire ou un copolymère éthylène-alcool vinylique.
